**Europäisches Patentamt**

(19) **European Patent Office**

**Office européen des brevets**

(11) Veröffentlichungsnummer: **0 068 521**

**B1**

(12) # EUROPÄISCHE PATENTSCHRIFT

(45) Veröffentlichungstag der Patentschrift:
**13.08.86**

(51) Int. Cl.⁴: **G 01 N 29/04**

(21) Anmeldenummer: **82200492.5**

(22) Anmeldetag: **26.04.82**

(54) Zerstörungsfreie Werkstoffprüfung von Generator-Rotor-Zähnen mittels Ultraschall.

(30) Priorität: **11.06.81 CH 3823/81**

(43) Veröffentlichungstag der Anmeldung:
**05.01.83 Patentblatt 83/1**

(45) Bekanntmachung des Hinweises auf die Patenterteilung:
**13.08.86 Patentblatt 86/33**

(84) Benannte Vertragsstaaten:
**CH DE FR IT LI NL SE**

(56) Entgegenhaltungen:
**FR-A-1 099 055**
**FR-A-2 404 851**
**US-A-3 332 278**
**US-A-3 712 119**

**J. und H. Krautkrämer "Werkstoffprüfung mit Ultraschall", 4. Auflage 1980, Springer Verlag Berlin, Heidelberg, New York, Seiten 331, 332, 394, 450, 451**
**"Techn. Discl. Bull." of Central Electricity Generating Board, No. 330, Juli 1979, London (GB); A.J.M. Lichnowski: "The in-situ ultrasonic examination of large generator rotors"**

(73) Patentinhaber: **BBC Aktiengesellschaft Brown, Boveri & Cie., Haselstrasse, CH- 5401 Baden (CH)**

(72) Erfinder: **Scholz, Arthur, Dipl.- Ing., Schönenbühlstrasse 46, CH- 5430 Wettingen (CH)**

LIBER, STOCKHOLM 1986

## Beschreibung

Die Erfindung bezieht sich auf ein Verfahren und eine Vorrichtung zur zerstörungsfreien Werkstoffprüfung mittels Ultraschall an Generator-Rotorzähnen mit eingelegtem Nutkeil unter Verwendung von mindestens einem Senderprüfkopf und mindestens einer Empfängerprüfkopfanordnung.

Generator-Rotorzähne bestehen aus Stahl hoher Festigkeit und unterliegen während des Betriebes einer beständig grossen mechanischen Beanspruchung durch axial und radial wirkende Kräfte, die einmal aus dem sogenannten Rotationslastspiel und zum anderen durch den Anpressdruck der Nutkeile an die Zahnflanken des Rotors resultiert.

Unter günstigen Bedingungen können bei zusätzlichem Auftreten von Reibkorrosion an den Kontaktflächen von Nutkeil und Rotorzahn sich von diesen ausgehende Ermüdungsrisse im Rotorzahn bilden, die stets senkrecht zur Rotorachse orientiert sind und die, nach Erreichen einer bestimmten kritischen Risstiefe, unter den oben erwähnten mechanischen Beanspruchungen sich fortlaufend vergrössern können. Diese Fehlstellen in den Rotorzähnen würden für den Betrieb der elektrischen Maschine ein erhebliches Sicherheits, risiko darstellen. Deshalb kommt der turnusmässigen Kontrolle von Rotorzähnen eine grosse Bedeutung zu. Zur Vermeidung hoher Demontage- und Montagekosten und längeren Stillstandszeiten der elektrischen Maschine, werden die Rotorzähne im nutverkeilten Zustand geprüft.

Für diese Prüfung wird vorteilhaft die zerstörungsfreie Werkstoffprüfung mittels Ultraschall eingesetzt.

Im "Technical Disclosure Bulletin" der "Central Electricitiy Generating Board London" No. 330 vom Juli 1979 mit dem Titel "The In-Situ Ultrasonic Examination of Large Generator Rotors" ist ein derartiges Prüfverfahren beschrieben und dargestellt. Mit diesem Prüfverfahren können aber offensichtlich nur Rotorzähne geprüft werden, bei welchen die Keilauflageflächen resp. die Zahnflanken parallel zu den Zahnrücken der Rotorzähne verlaufen.

Die meisten Rotorkonstruktionen weisen jedoch Keilauflageflächen auf, die nicht parallel zu den Zahnrücken der Rotorzähne verlaufen, sondern die normalerweise einen Winkel von 40-70° mit der Senkrechten des Rotorzahnhalses bilden. Für diese Rotorkonstruktion ist das oben erwähnte Prüfverfahren nicht anwendbar. >er will die Erfindung Abhilfe schaffen. Die Erfindung, wie sie in den Ansprüchen gekennzeichnet ist, löst die Aufgabe, ein Verfahren (Anspruch 1) und eine Vorrichtung (Anspruch 5) und zerstörungsfreien Werkstoffprüfung mittels Ultraschall an Generator-Rotorzahnen mit eingelegtem Nutkeil und unterschiedlichen Flanken- und Dachflächenwinkeln von Rotorzähnen anzugeben.

Die Erfindung stellt sich dabei im wesentlichen als Kombination zweier auf dem Gebiet der Werkstoffprüfung mit Ultraschall bisher unabhängig voneinander angewandten Prüfungsmethoden der sogenannten Deltaprüfung einerseits und der Reflexionsprüfung andererseits dar, wie sie beispielsweise in dem Buch von J. und H. Krautkrämer "Werkstoffprüfung mit Ultraschall", 4. Auflage, 1980, Springer Verlag Berlin, Heidelberg, New York; Seiten 331, 332, 394, 450, 451, beschrieben sind.

Das erfindungsgemässe Prüfverfahren weist folgende Vorteile auf:
- Durch zweifache Schallumlenkung ist es überhaupt erst möglich, die in bezug auf den Zahnhals schrägen Keilauflageflächen mit eingelegtem Nutkeil zuverlässig zu prüfen.
- Durch Verwendung eines Referenzprüfkopfes können vor allem die durch die Keilanpressung hervorgerufenen Schallbündelverluste bei der Fehlerauswertung berücksichtigt werden, so dass dadurch die Fehlererkennung hinsichtlich ihrer Grösse präziser wird.
- Durch diese Art der Schallbündelführung wird beim Nachweis von Fehlern der Art und Orientierung wie sie bei Rotorzähnen gesucht werden, eine hohe Selektivität und somit ein grosses Verhältnis von Fehlersignal zu Störuntergrund erreicht.

In gleicher Weise können durch Verwendung eines Referenzempfängers die Schallbündelverluste, die durch unregelmässige Ankopplung beim Uebergang von den Prüfköpfen in den Prüfling und umgekehrt entstehen können, bei der Fehlerauswertung entsprechend berücksichtigt werden.

Gemäss Anspruch 2 werden durch Vergleich der Signale von Referenzprüfkopf und Fehlerdetektionsprüfkopf Ausmass der geschädigten Stellen und Orientierung des gesuchten Fehlertyps detektiert. Dieser Vergleich wird in einem automatischen Auswertungssystem vorgenommen und die Fehlererkennung somit auf einfache und rasche Weise vollzogen.

Entsprechend Anspruch 3 kann ein Prüfkopf sowohl als Senderprüfkopf und für einen anderen Prüfkopf als Referenzprüfkorpf verwendet wobei die jeweilige Betriebsweise, Senden bzw. Empfangen durch einen elektrischen Taktgeber festgelegt wird. Vorteilhaft ist jeder Zahnflanke ein Fehlerdetektionsprüfkopf zugeordnet. Mit dieser Prüfkopfanordnung können durch Hinzufügen von nur einem weiteren Prüfkopf zu den bereits drei vorhandenen mit einem Prüfvorgang zwei Zahnflanken gleichzeitig geprüft werden.

Die Erfindung wird nachstehend anhand in der Zeichnung dargestellter Ausführungsbeispiele näher erläutert.

In der Zeichnung zeigt:
Fig. 1 eine perspektivische Ansicht eines Teils eines Rotors
Fig. 2 eine Vorderansicht auf einen Teil des Rotors
Fig. 3 eine Draufsicht auf eine Prüfkopfanordnung
Fig. 4 eine Draufsicht auf eine Prüfkopfanordnung

Fig. 5 eine schematische Darstellung eines Verfahrenszyklus einer Prüfoperation

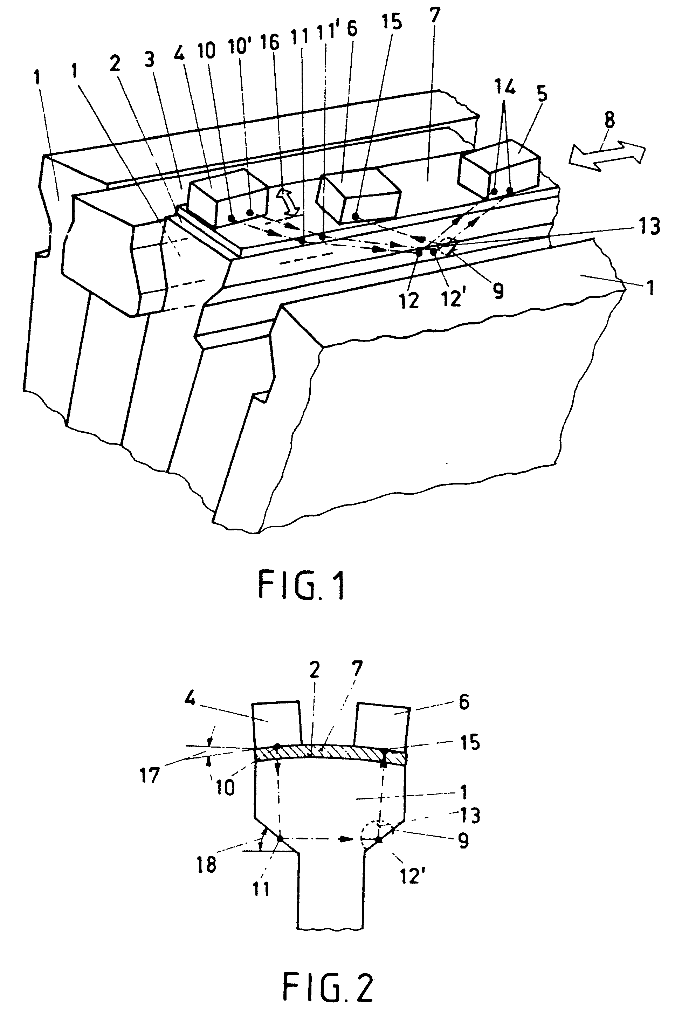

In Fig. 1 ist ein Teil eines Rotors dargestellt, wobei auf der Dachfläche 2 des Rotorzahnes 1 ein Senderprüfkopf 4, ein Referenzprüfkopf 5 und ein Fehlersignalprüfkopf 6 angeordnet sind, die von einer Trägerplatte 7 getragen werden. Diese Trägerplatte 7 ist der Form der Dachfläche 2 des Rotorzahns 1 angepasst.

In Fig. 1 ist auch ein Nutkeil 3 dargestellt, so dass ersichtlich ist, dass die Prüfung auch ohne Demontage der Nutkeile 3 stattfinden kann. Der Nutkeil 3 zwischen dem mittleren und vorderen Rotorzahn 1 wurde jedoch nicht gezeichnet, um den Strahlengang des Ultraschallbündels im Rotorzahn 1 besser veranschaulichen zu können. Mit der Bezugsziffer 8 ist die Bewegungsrichtung der Trägerplatte 7 gekennzeichnet, die in axialer Richtung über die gesamte Länge des Rotorzahns 1, von einer Stirnfläche des Rotors bis zur anderen, von Hand oder mechanisiert bewegt werden kann.

Im Rotorzahn 1 ist beispielsweise eine Fehlstelle 9 dargestellt, deren Vorhandensein und Lage durch die Ultraschallprüfung festgestellt werden soll und an der sich das Ultraschallbündel teilweise reflektiert. Der Verlauf des vom Senderprüfkopf 4 ausgestrahlten und gerichteten Ultraschallbündels durch den zu prüfenden Rotorzahn soll zuerst für den fehlerfreien Zustand des Rotorzahns 1 beschrieben werden wobei jeweils nur die Bündelachsen dargestellt sind: Bei dem mit Bezugsziffern 10 bezeichneten punkt tritt die Ultraschallbündelachse aus dem Senderprüfkopf 4 aus, durchdringt die Trägerplatte 7, trifft bei Punkt 11 auf die linke Zahnflanke des Rotorzahns 1, wird von dort reflektiert und trifft bei punkt 12 auf die rechte Zahnflanke des Rotorzahns 1 auf. Da sich im dargestellten Beispiel keine Fehlstelle 9 im Strahlengang des Ultraschallbündels befindet, wird es direkt in den Referenzempfänger 5 reflektiert, der den fehlerfreien Zustand des Rotorzahns 1 signalisiert.

Die für die Erzeugung und den Empfang der Ultraschallwellen notwendigen Hochfrequenzkabel an den prüfköpfen 4, 5 und 6 sind aus Gründen einer besseren Uebersichtlichkeit nicht dargestellt.

Bewegt man nun die Trägerplatte 7 gemäss der Pfeilrichtung 8 nach rechts (aus Gründen besserer Uebersicht wurden die Gehäuse der Prüfköpfe 4, 5, 6 und somit auch die Trägerplatte 7 am ursprünglichen Ort belassen und lediglich der Strahlenweg des Ultraschallbündels verändert) so tritt beispielsweise das vom Senderprüfkopf 4 ausgestrahlte und gerichtete Ultraschallbündel bei Punkt 10' aus dem Senderprüfkopf 4 aus, durchdringt wiederum zuerst die Trägerplatte 7 und trifft bei Punkt 11' auf der einen Zahnflanke des Rotorzahns 1 auf, wird von dort reflektiert und trifft bei Punkt 12' auf der anderen Zahnflanke des Rotorzahns 1 auf und wird dort wiederum reflektiert. Das Strahlenbündel wird nun durch eine Fehlstelle 9 aufgespalten, sodass der reguläre Teil mit abgeschwächter Intensität in den Referenzempfänger 5 gelangt. Der andere Teil des Strahlenbündels wird bei Punkt 13 reflektiert und in einem Fehlerdetektionsprüfkopf 6 empfangen, der die Fehlstelle 9 detektiert. Aus dem Vergleich zwischen der in den Referenzprüfkopf 5 und den Fehlerdetektionsprüfkopf 6 eingeschalteten Intensität des Strahlenbündels können Aussagen über Grösse und Typ der Fehlstelle 9 gemacht werden.

Fig. 2 zeigt eine Vorderansicht auf den in Fig. 1 dargestellten mittleren Rotorzahn 1. Die Bezugsziffern aus Fig. 1 gelten für dieselben Teile für Fig. 2 wie auch für die weiteren Zeichnungen. In der Zeichnung sieht man gut die Anpassung der Trägerplatte 7 an die Dachfläche 2 des Rotorzahnes 1 und auch den Verlauf des Schallbündels das vom Senderprüfkopf 4 ausgesandt wird, wobei die Lage des Schallbündels für den Fall dargestellt ist, wenn sich im Strahlengang des Schallbündels eine Fehlstelle 9 befindet, die entsprechend der Schilderung in Fig. 1 vom Fehlerdetektionsprüfkopf 6 signalisiert wird. Es ist selbstverständlich, dass in diesem Fall der Referenzprüfkopf 5, der in Fig. 2 nicht dargestellt ist, weil er durch den Fehlerdetektionsprüfkopf 6 verdeckt ist, wiederum eine verminderte Schallintensität empfängt.

Die Krümmung der Dachfläche 2 des Rotorzahnes 1 und entsprechend auch der Trägerplatte 7 ist durch den Winkel 17 dargestellt.

Mit der Bezugsziffer 18 ist der Flankenwinkel des Rotorzahnes 1 bezeichnet. Die Prüfköpfe 4, 5 und 6 sind so eingestellt, dass sie den Winkeln 17 und 18 entsprechen, d.h. dass die Schallführung und die Schallreflexion an den Zahnflanken der Rotorzähne 1 in der Weise erfolgt wie es in Fig. 1 beschrieben wurde. Die Austrittsstelle 10 der Schallbündelachse aus dem Senderprüfkopf 4, die Reflexion an den Punkten 11' und 12' an den beiden Zahnflanken, die Reflexion 13 an der Fehlstelle 9 und der Eintritt bei punkt 15 in den Fehlerdetektionsempfänger, entspricht demselben Vorgang wie in Fig. 1 geschildert.

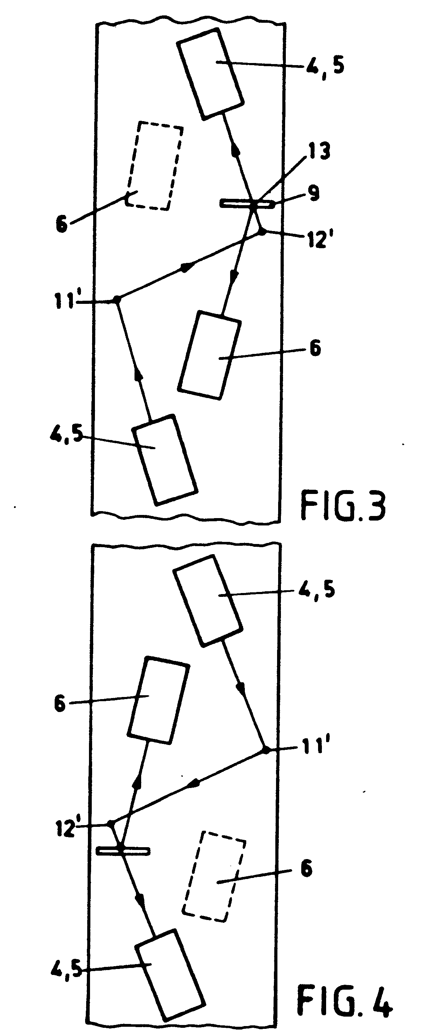

Die nachfolgenden Fig. 3, 4, 5 und 6 zeigen eine Draufsicht auf unterschiedliche Prüfkopfanordnungen, wie sie entsprechend des erfindungsgemässen Gegenstandes zur Anwendung kommen.

Die Prüfkopfanordnungen entsprechend den Fig. 3 und 4 sind nur wegen besserer Uebersichtlichkeit der Schallbündelführung getrennt gezeichnet und geben jeweils die Fehlererkennung für nur eine Zahnflanke wieder.

Für die Prüfung von Rotorzähnen entsprechend des erfindungsgemässen Erfindungsgegenstandes sind die beiden Prüfkopfanordnungen wie sie auf Fig. 3 und 4 dargestellt sind, auf einer Trägerplatte 7 kombiniert und wirken auf eine unten näher beschriebene Weise zusammen.

Es ist erkenntlich, dass für die Prüfung von nur einer Zahnflanke drei Prüfköpfe benötigt werden, und dass durch Hinzufügen von einem einzigen weiteren Prüfkopf beide Zahnflanken simultan geprüft werden können.

In Fig. 3 und 4 wird das Schallbündel jeweils im Senderprüfkopf 4 ausgesendet, dann wird die Bündelachse bei 11' an der nicht geprüften Zahnflanke das erste Mal und bei 12' an der geprüften Zahnflanke das zweite Mal reflektiert. Das Strahlenbündel wird nun jeweils durch eine Fehlstelle 9 aufgespalten, sodass der reguläre Teil jeweils mit abgeschwächter Intensität in den Referenzempfänger 5 gelangt. Der andere Teil des Strahlenbündels wird jeweils bei Punkt 13 reflektiert und jeweils in einem Fehlerdetektionsprüfkopf 6 empfangen, der die Fehlstelle 9 jeweils detektiert.

Betrachtet man die soeben für die Fig. 3 und 4 geschilderten Vorgänge in einem kombinierten Zusammenwirken, so erkennt man, dass Senderprüfkopf 4 und Referenzprüfkopf 5 zwar räumlich in Längs- und Umfangsrichtung des Rotors voneinander distanziert angeordnet sind, jedoch eine Funktionseinheit bilden und dass Senderprüfkopf 4 und Referenzprüfkopf 5 in der Weise zusammenwirken, so dass jeder Prüfkopf alternierend als Sender oder als Empfänger arbeitet.

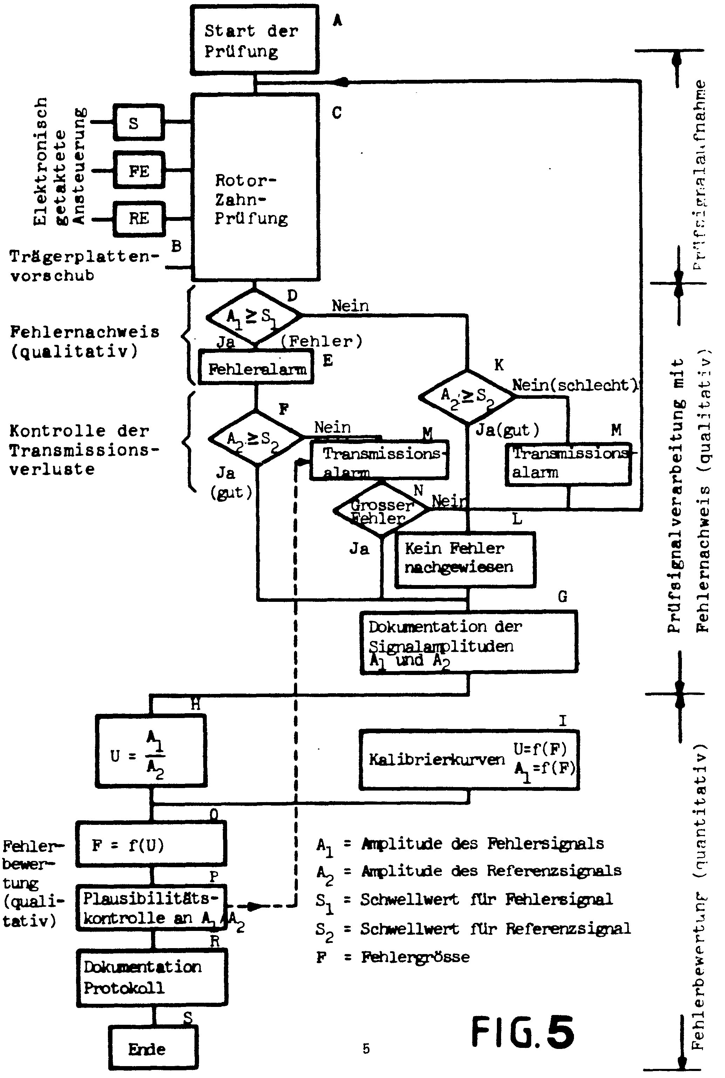

Fig. 5 veranschaulicht die einzelnen, operationellen Schritte des Verfahrensablaufes der Rotorzahnprüfung.

Mit der Bezugsziffer A ist der Punkt im Ablaufschema bezeichnet, mit dem der Start der Prüfung beginnt, nachdem alle Teile der Prüfeinrichtung auf ihre Funktionstüchtigkeit hin getestet worden sind.

Durch die elektronisch getaktete Ansteuerung werden Sendeimpulse vom Senderprüfkopf 4 ausgestrahlt, die während der Rotorzahnprüfung G in Phase C, vom Referenzprüfkopf 5 und bei eventuellem Vorhandensein von Fehlstellen auch vom Fehlerdetektionsprüfkopf 6 als Empfangsimpulse aufgenommen werden. Die Rotorzahnprüfung vollzieht sich durch einen beständigen Trägerplattenvorschub, der manuell oder mechanisch ausgeführt werden kann und sich über die gesamte axiale Rotorzahnlänge hin erstreckt.

In einer ersten Prüfstufe werden eventuell vorhandene Fehlstellen qualitativ nachgewiesen. Dies geschieht in der mit Bezugsziffer D bezeichneten Prüfphase, durch Vergleich der Amplitude des Fehlersignales $A_1$ mit derjenigen des zulässigen Schwellwertes des Fehlersignals $S_1$. Der zulässige Schwellwert $S_1$ des Fehlersignales wurde empirisch ermittelt und so gewählt, dass er etwas über der Amplitudenhöhe der Störuntergrundsignale liegt, die von ungefährlichen Unregelmässigkeiten der Keilauflageflächen herrühren und damit anzeigt, dass innerhalb einer bestimmten Amplitudenhöhe des zulässigen Schwellwertes $S_1$ im Rotorzahn keine Fehlerindikation vorliegt.

In der Prüfphase D können zwei Messergebnisse alternativ erkennbar werden:

ID: Ist $A_1$ kleiner als $S_1$, so scheint kein Fehler vorzuliegen.

2D: Ist $A_1$ grösser als $S_1$, so liegt grundsätzlich ein Fehler vor und es folgt ein Fehleralarm in Phase E.

Beide alternativen Messergebnisse unter Ziffer 1D und 2D sind nunmehr einer Kontrolle auf Transmissionsverluste zu unterziehen, die in den nachfolgenden Prüfphasen K und F vorgenonmen wird. Betrachtet man zuerst das Messergebnis gemäss Ziffer 1D, so wird in Phase K wiederum ein Amplitudenvergleich zwischen Referenzsignal $A_2$ und Schwellwert für Referenzsignal $S_2$ vorgenommen.

Der zulässige Schwellwert $S_2$ des Referenzsignales wurde wiederum empirisch ermittelt und zeigt an, dass oberhalb einer bestimmten Amplitudenhöhe des zulässigen Schwellwertes $S_2$, die Schallübertragung (Transmission) von und zu den Prüfköpfen 4, 5 und 6 im erwarteten Schwankungsbereich einwandfrei verläuft und keine unzulässigen Verluste infolge starker Keilanpressung oder infolge ungenügender Ankopplung der Trägerplatte 7 an die Dachfläche 2 des Rotorzahnes 1 vorliegen.

In der Prüfphase K können wiederum zwei Messergebnisse alternativ erkennbar werden:

1K: Ist $A_2$ grösser als $S_2$ so liegt der Normalfall vor, es sind keine Fehlstellen im Rotorzahn vorhanden, und es ist auch die Voraussetzung erfüllt, dass der Schalldurchgang (Transmission) in Ordnung ist.

2K: Ist $A_2$ kleiner als $S_2$ so liegen Transmissionsverluste vor.

Wie bereits erwähnt zeigt der Fall unter Ziffer 1K den Normalfall der Prüfung an, wobei nach Kontrolle des Schalldurchgangs keine Fehlstellen im Rotorzahn nachgewiesen werden (Phase L). Die beiden Signalamplituden $A_1$ und $A_2$ der prüfung, die eine Fehlerfreiheit der Rotorzähne nachweisen, werden schliesslich in Phase G dokumentiert.

Werden aber im Falle 2K Transmissionsverluste nachgewiesen, so wird in Phase M Transmissionsalarn ausgelöst, der zurück zu Phase A führt, wo die Prüfung der betreffenden Rotorzahnabschnitte nach Durchführung angezeigter Korrekturmassnahmen wie Verbesserung der Ankopplung oder Erhöhung der Signalverstärkung erneut beginnt.

Betrachtet man nun das oben angeführte Messergebnis gemäss Ziffer 2D, so werden in Phase F (analog zu Phase K) die Amplituden $A_2$ und $S_2$ verglichen, und es können zwei Messergebnisse alternativ erkennbar werden:

1F: Ist $A_2$ kleiner als $S_2$ so liegen Transmissionsverluste vor, die in diesem Fall auch durch den Fehler selbst verursacht sein können, sodass zwar in Phase M Transmissions-Alarm erfolgt, aber erst nach einem entsprechenden Entscheid in Phase N entweder zur weiteren Abklärung zurück zu Phase A oder bei plausibler Reduktion von $A_2$ zur Phase G weitergeleitet wird.

2F: Ist $A_2$ grösser als $S_2$ so ist der Schalldurchgang in Ordnung.

Eine plausible Reduktion von $A_2$ kann vorliegen, wenn durch grossflächige Fehler die Abschattung des regulären Schallbündels so stark wird, dass die Amplitude $A_2$ des Referenzsignals den Schwellwert $S_2$ unterschreitet, was in den nachfolgend zu Phase D beschriebenen Kalibrierkurven berücksichtigt ist, sodass die in Phase N anstehende Entscheidung durch Vergleich mit diesen erfolgen kann. Es ist ersichtlich, dass die im praktischen Ablauf simultan mögliche, aus Uebersichtlichkeitsgründen erst in Phase P aufgeführte Plausibilitätskontrolle an $A_1/A_2$ ebenfalls die dazu nötige Information liefern kann.

In Phase G werden die beiden Signalamplituden $A_1$ und $A_2$ dokumentiert. Es ist selbstverständlich, dass diese Dokumentation nicht nur die beiden Signalamplituden beinhaltet, sondern darüber hinaus den betreffenden Rotorzahnabschnitt erfasst, in dem diese Signale ermittelt wurden.

Anschliessend an den qualitativen Fehlernachweis, erfolgt über die Quotientenbildung aus den Amplituden des Fehlersignales $A_1$ und des Referenzsignales $A_2$ in Phase H die quantitative Fehlerbewertung in Phase 0, wobei zwei in Phase I ermittelte sogenannte Kalibrierkurven zugrunde gelegt werden.

Diese Kalibrierkurven stellen den funktionellen Zusammenhang von Fehlergrösse und Signalhöhen dar, der anhand von Fehlern bekannter Dimension gewonnen wurde und dabei auch die merkliche Abhängigkeit des Referenzsignals $A_2$ von der Fehlergrösse bei grösseren Fehlern erfasst. Die in diesem Bereich nicht mehr über den Schwellwert $S_2$ mögliche Ueberwachung der Transmissionsverluste erfordert die in Phase P erfolgende Kontrolle der Amplituden $A_1$ und $A_2$ auf Einhaltung der nach den Kalibrierkurven zulässigen Kombinationen und bedeutet beim Auftreten nicht plausibler Wertepaare einen Transmissionsalarm mit Rückkehr zur Fhase N, während bei positivem Ergebnis die ermittelte Fehlergrösse in Phase R im Protokoll dokumentiert wird.

Der Prüfvorgang kommt in Phase S zum Abschluss, nachdem sämtliche Rotorzähne in Längs- und Umfangsrichtung des Rotors geprüft wurden.

## Patentansprüche

1. Verfahren zur zerstörungsfreien Werkstoffprüfung mittels Ultraschall an Generator-Rotorzähnen mit eingelegtem Nutkeil unter Verwendung von mindestens einem Senderprüfkopf und einer Empfängerprüfkopfanordnung, dadurch gekennzeichnet, dass ein von dem Senderprüfkopf (4) ausgestrahltes Ultraschallbündel derart auf eine erste Zahnflanke eines Rotorzahns (1) gerichtet wird, dass das Ultraschallbündel in Richtung zur gegenüberliegenden zweiten Zahnflanke desselben Rotorzahns reflektiert wird, dass das von der zweiten Zahnflanke regulär reflektierte Ultraschallbündel mittels eines ersten in der Empfängerprüfkopfanordnung enthaltenen, als Referenzprüfkopf (5) fungierenden Empfängerprüfkopfes erfasst wird und dass an eventuellen Fehlerstellen nichtregulär reflektierte Anteile des Ultraschallbündels mittels eines zweiten in der Empfängerprüfkopfanordnung enthaltenen Fehlerdetektionsprüfkopfes (6), der ausserhalb der regulären Reflexionsrichtung angeordnet wird, empfangen und bei Auftreten solcher nicht regulär reflektierter Anteile ein Fehler signalisiert wird.

2. Verfahren nach Anspruch 1, dadurch gekennzeichnet, dass aus einem Vergleich der Signale von Referenzprüfkopf (5) und Fehlerdetektionsprüfkopf (6) Ausmass und Orientierung der geschädigten Stellen (9) bestimmt werden.

3. Verfahren nach Anspruch 1 oder 2, dadurch gekennzeichnet, dass der Senderprüfkopf (4) auch als Referenzprüfkopf (5) für einen weiteren Senderprüfkopf verwendet wird, wobei die jeweilige Betriebsweise, Senden bzw. Empfangen, und die Dauer des Sendens bzw. Empfangens durch einen elektronischen Taktgeber festgelegt wird.

4. Verfahren nach einem der Ansprüche 1 bis 3, dadurch gekennzeichnet, dass jeder Zahnflanke ein Fehlerdetektionsprüfkopf (6) zugeordnet ist.

5. Vorrichtung zur Durchführung des Verfahrens nach Anspruch 1 mit auf einer Trägerplatte (7) angeordneten Sender- und Empfängerprüfköpfen (4, 6) dadurch gekennzeichnet, dass mindestens ein Senderprüfkopf (4), mindestens ein Referenzprüfkopf (5) und mindestens ein Fehlerdetektionsprüfkopf (6) auf der Trägerplatte (7) beweglich befestigt angeordnet sind, wobei die Kontaktfläche der Trägerplatte (7) der Oberfläche des Rotorzahnes (1) angepasst ist.

6. Vorrichtung nach Anspruch 5, dadurch gekennzeichnet, dass Senderprüfkopf (4), Referenzprüfkopf (5) und Fehlerdetektionsprüfkopf (6) in Längs- und Umfangsrichtung des Rotors räumlich voneinander distanziert angeordnet sind.

7. Vorrichtung nach Anspruch 5 oder 6, dadurch gekennzeichnet, dass jeweils ein Senderprüfkopf (4) und ein Referenzprüfkopf (5), die räumlich in Längs- und Umfangsrichtung des Rotors voneinander distanziert angeordnet sind, eine Funktionseinheit bilden und dass Senderprutkopf (4) und Referenzprüfkopf (5) in der Weise zusammenwirken, so dass jeder Prüfkopf alternierend als Sender oder als Empfänger arbeitet (Fig. 5 und 4).

8. Vorrichtung nach einem der Ansprüche 5 bis 7, dadurch gekennzeichnet, dass die Trägerplatte in Längsrichtung des Generator-Rotorzahnes angeordnet ist und von einer bis zur gegenüberliegenden Stirnseite des Rotors verfahrbar ist und sich auf diesem abstützt.

9. Vorrichtung nach einem der Ansprüche 5 bis 7, dadurch gekennzeichnet, dass die Trägerplatte mit wenigstens zwei mit der Zahnoberfläche zusammenwirkenden Magneten versehen ist.

## Claims

1. Process for non-destructive materials testing by means of ultrasonics on generator rotor teeth with inserted slot wedge using at least one transmitter probe and one receiver probe arrangement, characterized in that an ultrasonic beam radiated from the transmitter probe (4) is directed onto a first tooth flank of a rotor tooth (1) in such a way that the ultrasonic beam is reflected to the opposite second tooth flank of the same rotor tooth, in that the ultrasonic beam regularly reflected from the second tooth flank is detected by means of a first receiver probe which is contained in the receiver probe arrangement and acts as reference probe (5), and in that non-regularly reflected components of the ultrasonic beam at any defect points there may be are received by means of a second defect detection probe (6) which is contained in the receiver probe arrangement and is arranged outside the regular direction of reflection and, when such non-regularly reflected components occur, a defect is signalled.

2. Process according to Claim 1, characterized in that, from a comparison of the signals from reference probe (5) and defect detection probe (6), extent and orientation of the damage points (9) are determined.

3. Process according to Claim 1 or 2, characterized in that the transmitter probe (4) is also used as reference probe (5) for a further transmitter probe, the respective mode of operation, transmission or reception, and the duration of the transmission or reception is fixed by an electronic clock generator.

4. Process according to one of Claims 1 to 3, characterized in that each tooth flank is assigned a defect detection probe (6).

5. Device for implementation of the method according to Claim 1 with transmitter and receiver probes (4, 6) arranged on a supporting plate (7), characterized in that at least one transmitter probe (4), at least one reference probe (5) and at least one defect detection probe (6) are arranged movably fastened on the supporting plate (7), the contact area of the supporting plate (7) being adapted to the surface of the rotor tooth (1).

6. Device according to Claim 5, characterized in that transmitter probe (4), reference probe (5) and defect detection probe (6) are arranged spaced apart from one another in the longitudinal and circumferential directions of the rotor.

7. -Device according to Claim 5 or 6, characterized in that in each case one transmitter probe (4) and one reference probe (5), which are arranged spaced apart from each other in longitudinal and circumferential directions of the rotor, form a functional unit, and in that transmitter probe (4) and reference probe (5) interact in such a way that each probe operates alternately as transmitter or as receiver (Figures 3 and 4).

8. Device according to one of Claims 5 to 7, characcerized in that the supporting plate is arranged in longitudinal direstion of the generator rotor tooth and is movable from one face to the opposite face of the rotor and is supported on the latter.

9. Device according to one of Claims 5 to 7, characerized in that the supporting plate is provided with at east two magnets interacting with the tooth surface.

## Revendications

1.- Procédé de contrôle ultrasonore non destructif des dents de rotor d'un générateur munies de leurs cales au moyen d'au moins une tête de contrôle émettrice et d'un montage de têtes de contrôle réceptrices, caractérisé en ce qu'un faisceau d'ultrasons émis par la tête de contrôle émettrice (4) est orienté vers un premier flanc d'une dent de rotor (1) d'une manière telle que le faisceau d'ultrasons soit réfléchi en direction du second flanc opposé de la même dent de rotor, le faisceau d'ultrasons régulier réfléchi par le second flanc de la dent est detecté au moyen d'une première tête de contrôle receptrice du montage de têtes de contrôle réceptrices fonctionnant comme tête de contrôle de référence (5) et la fraction du faisceau d'ultrasons réfléchie de manière non régulière par d'éventuelles défauts est reçue au moyen d'une seconde tête de contrôle de détection de défauts (6) contenue dans le montage de têtes de contrôle réceptrices, qui est disposé en dehors de la direction de réflexion régulière, et, lors de l'apparition de telles fractions réfléchies non régulières, un défaut est signalé.

2.- Procédé suivant la revendication 1, caractérisé en ce qu'au départ d'une comparaison des signaux de la tête de contrôle de reference (5) et de la tête de contrôle de détection de défauts (6), on détermine les dimensions et l'orientation des endroits endommagés (9).

3.- Procédé suivant la revendication 1 ou 2, caractérisé en ce que la tête de contrôle émettrice (4) est utilisée aussi comme tête de contrôle de référence (5) pour une autre tête de contrôle émettrice, étant entendu que le mode de fonctionnement utilisé, emission ou réception, et la durée de l'emission ou de la reception, sont fixés par une horloge électronique.

4.- Procédé suivant l'une quelconque des revendications 1 à 3, caractérisé en ce qu'à chaque flanc de dent est associée une tête de contrôle de detection de défauts (6).

5.- Dispositif pour exécuter le procédé suivant la revendication 1, comportant des têtes de contrôle émettrice et réceptrice (4, 6) montées sur une plaque de support (7), caractérisé en ce qu'au moins une tête de contrôle émettrice (4), au moins une tête de de contrôle de référence (5) et au moins une tête de contrôle de détection de défauts (6) sont fixées de façon mobile sur la plaque de support (7), la surface de contact de la plaque de support (7) étant adaptée à la surface de la dent de rotor (1).

6.- Dispositif suivant la revendication 5, caractérisé en ce que la tête de contrôle émettrice (4), la tête de contrôle de référence (5) et la tête de contrôle de détection de défauts (6) sont montées à une certaine distance l'une de l'autre dans le sens longitudinal et dans le sens circonférentiel du rotor.

7.- Dispositif suivant la revendication 5 ou 6, caractérisé en ce qu'une tête de contrôle émettrice (4) et une tête de contrôle de référence (5), qui sont montées à distance l'une de l'autre dans le sens longitudinal et dans le sens circonférentiel du rotor, forment une unité fonctionnelle et la tête de contrôle émettrice (9) ainsi que la tête de contrôle de référence (5) coopèrent d'une manière telle que chaque tête de contrôle fonctionne alternativement comme émetteur ou comme récepteur (Fig. 3 et 4).

8.- Dispositif suivant l'une quelconque des revendications 5 à 7, caractérisé en ce que la plaque de support est montée dans le sens longitudinal de la dent de rotor de générateur, peut être deplacée depuis une face d'about du rotor jusqu'à la face opposée de celui-ci et prend appui sur ce rotor.

9.- Dispositif suivant l'une quelconque des revendications 5 à 7, caractérisé en ce que la plaque de support est pourvue d'au moins deux aimants coopérant avec la surface de la dent.

FIG.1

FIG.2

0 068 521

FIG.3

FIG. 4

3

0 068 521

**A** Start der Prüfung

Elektronisch getaktete Ansteuerung

S

FE

RE

**B** Trägerplattenvorschub

**C** Rotor-Zahn-Prüfung

Fehlernachweis (qualitativ)

**D** $A_1 \geq S_1$ — Nein — (Fehler)

Ja

**E** Fehleralarm

Kontrolle der Transmissionsverluste

**F** $A_2 \geq S_2$ — Nein

Ja (gut)

**M** Transmissionsalarm

**N** Grosser Fehler — Nein

Ja

**K** $A_2 \geq S_2$ — Nein(schlecht)

Ja(gut)

**M** Transmissionsalarm

**L** Kein Fehler nachgewiesen

**G** Dokumentation der Signalamplituden $A_1$ und $A_2$

**H** $U = \dfrac{A_1}{A_2}$

**I** Kalibrierkurven $U = f(F)$ $A_1 = f(F)$

Fehlerbewertung (qualitativ)

**O** $F = f(U)$

**P** Plausibilitätskontrolle an $A_1, A_2$

**R** Dokumentation Protokoll

**S** Ende

Prüfsignalaufnahme

Prüfsignalverarbeitung mit Fehlernachweis (qualitativ)

Fehlerbewertung (quantitativ)

$A_1$ = Amplitude des Fehlersignals

$A_2$ = Amplitude des Referenzsignals

$S_1$ = Schwellwert für Fehlersignal

$S_2$ = Schwellwert für Referenzsignal

$F$ = Fehlergrösse

**FIG. 5**